# EUROPEAN PATENT SPECIFICATION

(11) **EP 1 411 200 B1**
(45) Date of publication and mention of the grant of the patent: **21.11.2007**
(21) Application number: 03023378.7
(22) Date of filing: 16.10.2003
(51) Int. Cl.: E05D 5/06, B60R 1/06, B60J 5/04

(54) **A door assembly for a lorry cab**
Türanordnung für eine Lastfahrzeugkabine
Ensemble de porte pour une cabine de camion

(30) Priority: 17.10.2002 IT TO20020907
(43) Date of publication of application: 21.04.2004
(73) Proprietor: IVECO S.p.A., 10156 Torino (IT)
(72) Inventor: Giovine, Mauro, 10090 Castiglione Torinese (IT); Carignano, Marco, 10137 Torino (IT); Lambert, Bruno, 10050 Novalesa (IT)
(74) Representative: Gervasi, Gemma

(56) References cited:
- EP-A- 0 190 715
- DE-A- 4 011 787
- US-A- 1 934 074
- US-B1- 6 375 334

## Description

The present invention relates to door assembly for a lorry cab*.* EP-A-0 190 715 discloses a lorry cab door assembly having the features of the preamble of claim 1.

Door assemblies for a lorry cab are known, comprising an annular frame defining a door opening, a door, an upper hinge and a lower hinge connecting the door to a front pillar of the frame and defining an axis of rotation of said door; the door comprises a lower full panel zone and an upper zone defining a window frame.

The two hinges are interposed between the front pillar of the frame and the lower zone of the door in the vicinity of the lower and upper ends of a front vertical side of said zone. The lock is generally disposed in the vicinity of the opposite side of the lower zone of the door. Therefore, all the connection points of the door to the frame, formed by the two hinges and by the lock, are arranged in alignment with the lower zone

This type of conventional arrangement has a number of drawbacks.

Firstly, since the connection points and, in particular, the two hinges, are disposed at a small distance apart in relation to the dimensions of the door, the centering accuracy of the door in relation to the door opening is low.

Moreover, since the upper zone of the door is arranged so as to project in relation to the connections, it is subject to considerable deformation, particularly in transverse direction with respect to the direction of travel of the vehicle. This deformation, which is caused above all by dynamic effects (centrifugal forces, wind, differences in pressure between the inside and outside of the cab) may even attain values of several millimetres at the level of the upper edge of the door and make possible the ingress of air and water into the cab or, in any case, cause the dimensions of the door seals to become critical

The object of the present invention is to devise a door assembly for a lorry cab, which does not have the drawbacks associated with the above-described known door assemblies.

Said object is achieved by the present invention in that it relates to a door assembly for a lorry cab according to attached claim 1.

According to a preferred embodiment of the invention, the upper hinge defines an attachment for a support for a rearview side mirror.

With a view to a better understanding of the invention two preferred embodiments will be described non-restrictively by way of example below, with reference to the accompanying drawings, in which:
Figure 1 is a view in perspective of a first door assembly designed in accordance with the invention, in an open position;
Figure 2 is a view in perspective of the door assembly in Figure 1, in a closed position, and
Figure 3 is a view in perspective and on an enlarged scale of a detail of the door assembly, according to a variant of embodiment of the invention.

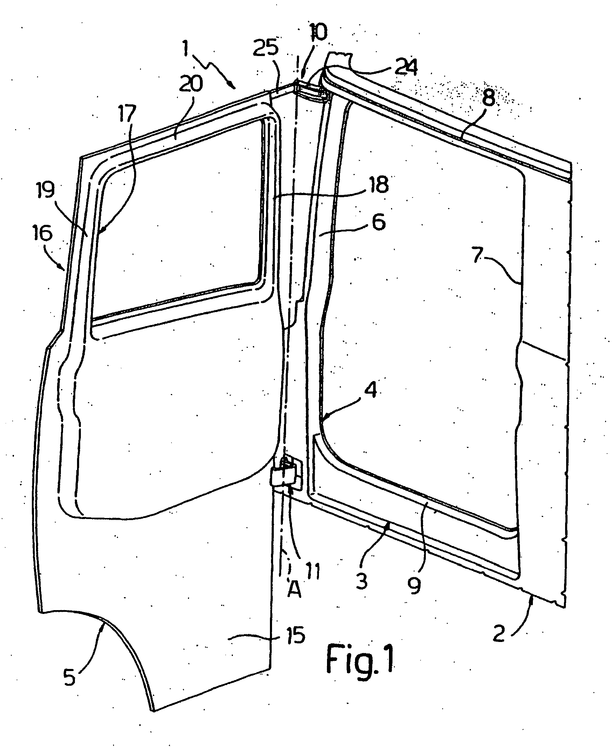

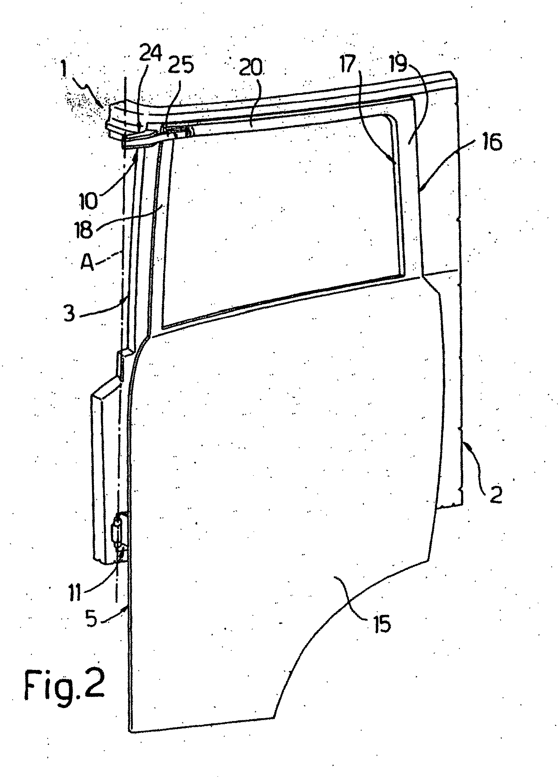

With reference to Figures 1 and 2, the reference numeral 1 generally denotes a door assembly for a cab 2 (partially illustrated) of a lorry.

The door assembly 1 essentially comprises a substantially rectangular annular frame 3 defining a door opening 4 and a door 5. The frame 3 comprises a front pillar 6, a rear pillar 7, an upper side member 8 and a lower side member 9 delimiting between them the door opening 4.

The door 5 is connected to the front pillar 6 by means of an upper hinge 10 and a lower hinge 11 which define an axis of rotation A of said door.

The door comprises, in conventional manner, a lower full panel zone 15 and an upper zone 16 defining a window frame 17, and comprising, in particular, a front pillar 18, a rear pillar 19 and an upper cross-member 20.

The lower hinge 11 is interposed between the front pillar 6 of the frame and the lower zone 15 of the door 5, in the vicinity of the lower side member 9 of the frame 3.

According to the present invention, the upper hinge 10 is interposed between the front pillar 6 of the frame 3 and the upper zone 16 of the door 5.

In particular, the upper hinge 10 comprises a fixed member 24 rigidly secured to the frame 3 in the vicinity of the connecting zone between the front pillar 6 and the upper side member 8, and a movable member 25 rigidly secured to the upper zone 16 of the door 5, in alignment with the connection between the upper pillar 18 and the upper cross-member 20 of the door 5.

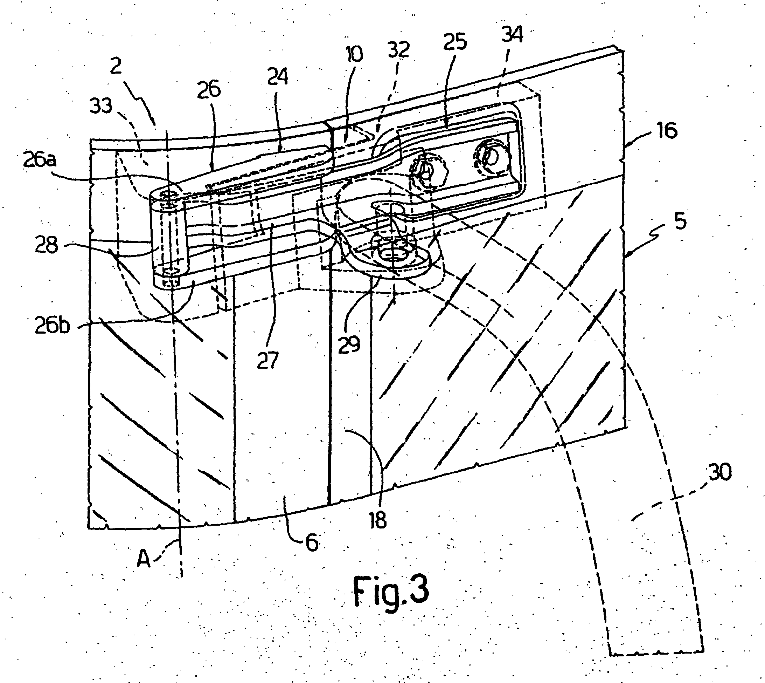

As is also clearly visible with reference to the enlarged detail of Figure 3, the fixed member 24 and the movable member 25 comprise respective arms 26,27 extending so as to protrude forwards with respect to the travel direction of the vehicle; the arm 27 forms at a free end thereof a bush 28 with an axis A, which is disposed axially between an upper end portion 26a and a lower end portion 26b of the arm 26 and pivotably mounted thereto by way of a pivot (not shown) with an axis A. Owing to the projecting arrangement of the arms 26 and 27, it is possible to obtain a certain amount of freedom in the positioning of the axis A and, therefore, to reduce the design and stylistic constraints with respect to the front edge of the door 5.

With reference to Figure 3, according to a preferred embodiment of the invention the upper hinge 10 incorporates an attachment member 29 for a support 30 of a rearview side mirror of the vehicle, for example in the shape of a rod. In particular, the attachment member 29 is defined by a bracket extending integrally so as to project outwards from the vehicle from the movable member 25 of the upper hinge, and to which the support 30 is connected by means of a conventional hinge 31 which, therefore, is not illustrated in detail, designed to allow rotation of the support 30 in event of impact with an obstacle.

The upper hinge 10 is suitably completed by an outer covering fairing 32 for purely stylistic reasons, indicated in dashed line in Figure 3, and comprising a fixed part 33 and a movable part 34 which cover, respectively, the fixed member 24 and the movable member 25.

The advantages achieved with the present invention are apparent from the features of the door assembly 1 designed in accordance with the invention.

The application of the upper hinge 10 to the upper zone 16 of the door 5 makes it possible to move apart the connection points defined by the two hinges 10,11. Therefore, the centering accuracy of the door 5 is improved.

Moreover, since the upper zone 16 of the door is now connected to the cab, the transverse deformations of said zone are substantially reduced, which offers advantages in respect of the dimensioning of the door seals.

In the event that the upper hinge 10 also incorporates the attachment 29 for the support 30 of the mirror, the use of a dedicated fastening bracket is avoided, whereby there is an obvious saving in the costs of manufacture and installation of the bracket.

Finally, it is evident that the door assembly described can be subject to modifications and variants which do not depart from the scope of protection defined by the claims.

## Claims

1. A door assembly (1) for a lorry cab (2) comprising an annular frame (3) defining a door opening (4), a door (5), an upper hinge (10) and a lower hinge (11) connecting said door (5) to a front pillar (6) of said frame (3) and defining an axis of rotation (A) of said door (5), said door (5) comprising a lower full panel zone (15) and an upper zone (16) defining a window frame (17), said lower hinge (11) being interposed between said front pillar (6) of said frame (3) and said lower zone (15) of the door (5), the upper hinge (10) being interposed between said front pillar (6) of the frame (3) and said upper zone (16) of the door (5), said upper hinge (10) comprising a fixed member (24) rigidly secured to said frame (3) and a movable member (25),
**characterised in that** said movable member is rigidly secured to said upper zone (16) of the door (5), in alignment with the connection between an upper front pillar (18) and an upper cross-member (20) of said door (5).

2. A door assembly according to claim 1, **characterised in that** said fixed member (24) and said movable member (25) comprise respective arms (26,27) projecting forwards, with respect to the direction of travel of the vehicle, and connected to one another in a hinged manner in correspondence with respective end portions (26a,26b;28).

3. A door assembly according to claim 1 or 2, **characterised in that** said upper hinge (10) incorporates an attachment member (29) for a support (30) of a rearview side mirror.

4. A door assembly according to claim 3, **characterised in that** said attachment member (29) is carried by said movable member (25) of said upper hinge (10).

5. A door assembly according to claim 4, **characterised by** comprising an outer fairing (32) covering said upper hinge (10).

## Patentansprüche

1. Türanordnung (1) für eine Lastfahrzeugkabine (2), welche einen ringförmigen Rahmen (3) umfasst, der eine Türöffnung (4), eine Tür (5) sowie ein oberes Drehgelenk (10) und ein unteres Drehgelenk (11) festlegt, welche die genannte Tür (5) mit einem Vorderholm (6) des genannten Rahmens (3) verbinden und eine Drehachse (A) der genannten Tür (5) festlegen, wobei die genannte Tür (5) einen unteren, mit einem Großblech versehenen Bereich (15) und einen oberen Bereich (16) umfasst, welcher einen Fensterrahmen (17) festlegt, wobei das genannte untere Drehgelenk (11) sich zwischen dem genannten Vorderholm (6) des genannten Rahmens (3) und dem genannten unteren Bereich (15) der Tür (5) befindet, und das obere Drehgelenk (10) sich zwischen dem genannten Vorderholm (6) des Rahmens (3) und dem genannten oberen Bereich (16) der Tür (5) befindet und das genannte obere Drehgelenk (10) ein festes, starr am genannten Rahmen (3) befestigtes Teil (24) und ein bewegliches Teil (25) umfasst, **dadurch gekennzeichnet, dass** das genannte bewegliche Teil. am genannten oberen Bereich (16) der Tür (5) in Ausrichtung mit der Verbindung zwischen dem oberen Vorderholm (18) und einem oberen Querträger (20) der genannten Tür (5) starr befestigt ist.

2. Türanordnung gemäß Anspruch 1, **dadurch gekennzeichnet, dass** das genannte feste Teil (24) und das genannte bewegliche Teil (25) zugehörige Arme (26, 27) umfassen, die in Bezug auf die Fahrtrichtung des Fahrzeugs nach vom abstehen und untereinander auf gelenkige Weise im Zusammenwirken mit den zugehörigen Endbereichen (26a, 26b, 28) verbunden sind.

3. Türanordnung gemäß Anspruch 1 oder 2, **dadurch gekennzeichnet, dass** in das genannte obere Drehgelenk (10) ein Anbringungselement (29) für eine Halterung für einen Rückspiegel eingebaut ist.

4. Türanordnung gemäß Anspruch 3, **dadurch gekennzeichnet, dass** das genannte Anbringungselement (29) von dem genannten beweglichen Teil (25) des genannten oberen Drehgelenks (10) getragen wird.

5. Türanordnung gemäß Anspruch 4, **dadurch gekennzeichnet, dass** sie eine Außenverkleidung (32) umfasst, welche das genannte obere Drehgelenk (10) abdeckt.

## Revendications

1. Ensemble formant porte (1) pour une cabine de camion (2), comportant un cadre annulaire (3) définissant une ouverture de porte (4), une porte (5), une charnière supérieure (10) et une charnière inférieure (11) reliant ladite porte (5) à un pilier avant (6) dudit cadre (3), et définissant un axe de rotation (A) de ladite porte (5), ladite porte (5) comportant une zone de panneau plein inférieure (15) et une zone supérieure (16) définissant un cadre de fenêtre (17), ladite charnière inférieure (11) étant interposée entre ledit pilier avant (6) dudit cadre (3) et ladite zone inférieure (15) de la porte (5), la charnière supérieure (10) étant interposée entre ledit pilier avant (6) du cadre (3) et ladite zone supérieure (16) de la porte (5),
ladite charnière supérieure (10) comportant un élément fixe (24) fixé de manière rigide sur ledit cadre (3), et un élément mobile (25)
**caractérisé en ce que** ledit élément mobile est fixé de manière rigide sur ladite zone supérieure (16) de la porte avant (5), en alignement avec la connexion entre un pilier supérieur (18) et une entretoise supérieure (20) de ladite porte (5).

2. Ensemble formant porte selon la revendication 1, **caractérisé en ce que** ledit élément fixe (24) et ledit élément mobile (25) comportent des bras respectifs (26, 27) faisant saillie vers l'avant, par rapport à la direction de déplacement du véhicule, et reliés l'un à l'autre d'une manière articulée en correspondance avec des parties d'extrémité respectives (26a, 26b ; 28).

3. Ensemble formant porte selon la revendication 1 ou 2, **caractérisé en ce que** ladite charnière supérieure (10) comporte un élément de fixation (29) pour un support (30) d'un rétroviseur latéral.

4. Ensemble formant porte selon la revendication 3, **caractérisé en ce que** ledit élément de fixation (29) est supporté par ledit élément mobile (25) de ladite charnière supérieure (10).

5. Ensemble formant porte selon la revendication 4, **caractérisé en ce qu'**il comporte un carénage extérieur (32) recouvrant ladite charnière supérieure (10).
